# NEUE EUROPÄISCHE PATENTSCHRIFT

(11) **EP 0 180 868 B2**
(45) Veröffentlichungstag und Bekanntmachung des Hinweises auf die Entscheidung über den Einspruch: **02.03.1994**
(45) Hinweis auf die Patenterteilung: 08.01.1992
(21) Anmeldenummer: 85113573.1
(22) Anmeldetag: 25.10.1985
(51) Int. Cl.: C09D 133/06, C09D 127/08, C08L 33/06, C08F 220/12

(54) **Verwendung von wässrigen Dispersionen von Vinylidenchlorid-(meth)acrylestercopolymerisaten als Bindemittel in Putzen**
Use of aqueous dispersions of vinylidene chloride-(meth)acrylate copolymers as binders in plasters
Utilisation des dispersions aqueuses de copolymères de chlorure de vinylidène et de (méth)acrylates comme liants de plâtres

(30) Priorität: 08.11.1984 DE 3440792
(43) Veröffentlichungstag der Anmeldung: 14.05.1986
(73) Patentinhaber: BASF Aktiengesellschaft, 67063 Ludwigshafen (DE)
(72) Erfinder: Penzel, Erich, Dr., D-6700 Ludwigshafen (DE); Prange, Walter, Dr., D-6800 Mannheim 1 (DE); Melan, Michael, Dr., D-6706 Wachenheim (DE); Wistuba, Eckehard, Dr., D-6702 Bad Duerkheim (DE); Mueller, Alfred, Dr., D-6843 Biblis (DE)

(56) Entgegenhaltungen:
- EP-A- 0 064 228
- DE-A- 2 050 747
- GB-A- 1 323 419
- GB-A- 1 450 916
- Scott Bader Polidine 33-061, Technical Leaflet No. 528, June 1970 and No. 44, September 1984

## Beschreibung

Mit Kunstharz gebundene Putze werden bevorzugt mit Bindemitteln auf Basis von Polymer-Dispersionen hergestellt. Bei hohen Ansprüchen hinsichtlich Vergilbung werden Copolymerisat-Dispersionen aus Acrylsäure- und Methacrylsäureestern verwendet, die eine Wasseraufnahme (nach DIN 53 495 bestimmt) von ca. 15 bis 25 Gew.-% haben. Bei erhöhter Pigmentierung neigen die mit diesen Bindemitteln hergestellten Putze aber zum Kreiden und hinsichtlich des Brandverhaltens erfüllen sie DIN 4102 nur ganz knapp. Weiter verarbeitet sind auch Copolymerisat-Dispersionen aus Acrylsäureestern und Styrol, die eine Wasseraufnahme von etwa 15 bis 20 Gew.-% haben. Die hiermit hergestellten Putze erfüllen aber die Brennbarkeitsprüfung nach DIN 4102 nicht. weniger hohen Ansprüchen genügen als Bindemittel auch wäßrige Dispersionen von Copolymerisaten aus Butadien und Styrol, doch sind die damit hergestellten Putze weniger lichtbeständig, d.h. sie vergilben leichter, kreiden sehr schnell (nach einem Jahr) und verspröden. Sie sind daher nicht sehr verbreitet.

Auch Bindemittel auf Basis von wäßrigen Dispersionen von Vinylestern werden eingesetzt doch sind diese, insbesondere wenn sie als Hauptmonomeres Vinylacetat einpolymerisiert enthalten, weniger wetterbeständig und weniger verseifungsstabil.

Aus der EP-PS 0064228 ist es bekannt, daß man das Brandverhalten von Kunstharz-gebundenen Putzen verbessern kann, indem man bei der Herstellung des Bindemittels zu einer üblichen wäßrigen Dispersion aus (Meth)-acrylat-Copolymeren eine wäßrige Dispersion eines Copolymerisats mischt, das mindestens 70 % seines Gewichts Vinylchlorid oder Vinylidenchlorid einpolymerisiert enthält. Dabei werden Vinylchlorid-Copolymerisat-Dispersionen vorgezogen.

Zudem ist es aus der US-PS 4 110 296 bekannt, als Bindemittel für Putze wäßrige Copolymerisat-Dispersionen aus 20 bis 60 % Ethylhexylacrylat, 10 bis 40 % Acrylnitril und 10 bis 40 % Halogenatome enthaltender Monomerer, wie Vinylidenchlorid einzusetzen, wobei aber als Halogenatome enthaltende Monomere Pentachlorphenylmethacrylat und Tribromphenylmethacrylat vorgezogen werden. Beim Einsatz als Bindemittel werden noch, bezogen auf die Menge an Polymerisat, 10 bis 40 Gew.% Triorganophosphate zugesetzt. Auf diese Weise kann zwar das Brandverhalten der Putze verbessert werden, doch muß dabei eine erhöhte Neigung zum Vergilben in Kauf genommen werden.

Es wurde nun gefunden, daß man als Bindemittel in Putzen mit Vorteil wäßrige Dispersionen von Copolymerisaten einer Mindestfilmbildetemperatur von -15 bis +20 °C aus
(a) 10 bis 50 Gew.% Vinylidenchlorid, das bis zur Hälfte durch Vinylchlorid ersetzt sein kann,
(b) 44 bis 88 Gew.% Estern der Acryl- und/oder Methacrylsäure mit 1 bis 18 C-Atome enthaltenden Alkanolen und gegebenenfalls Styrol, Vinylacetat, Vinylpropionat oder Mischungen dieser Monomeren und
(c) 2 bis 6 Gew.% α ,β-monoolefinisch ungesättigten 3 bis 5 C-Atome enthaltenden Mono- und/oder Dicarbonsäuren und/oder deren Amiden

verwenden kann, wobei sich die Gewichtsprozente auf das Polymerisat beziehen.

Die Herstellung der wäßrigen Dispersionen kann in üblicher Weise durch Emulsions-Copolymerisation der Monomeren unter Verwendung der üblichen Emulgier- und Dispergier-Hilfsmittel sowie der üblichen wasserlöslichen, radikalbildenden Polymerisationsinitiatoren, wie Alkali-persulfaten vorteilhaft in Kombination mit wasserlöslichen Reduktionsmitteln wie Formaldehydsulfoxylat, Thiosulfat oder Natriumpyrosulfit erfolgen. Als Emulgiermittel werden vorzugsweise mit Ethylenoxid umgesetzte Alkylphenole und/oder deren Schwefelsäureester in Mengen von 1 bis 4, vorzugsweise von 1,5 bis 2,5 Gew.-%, bezogen auf die Monomeren, eingesetzt. Mit Polymerisation, bei der die Monomeren dem Polymerisationsgemisch für sich oder in emulgierter Form zugeführt werden können, kann meist bei Temperaturen von 30 bis 90°C, vorzugsweise von 50 bis 70°C durchgeführt sein.

Die Menge an Vinylidenchlorid beträgt vorzugsweise 20 bis 40 Gew.%, bezogen auf die gesamten Monomeren. Es kann bis zur Häfte durch Vinylchlorid ersetzt sein. Die Menge an (Meth)-acrylsäureestern und gegebenenfalls Styrol, Vinylacetat oder Vinylpropionat beträgt vorzugsweise 66 bis 78 Gew.%, und Acryl- und Methacrylsäureester von 1 bis 4 C-Atome enthaltenden Alkanolen werden vorgezogen, wobei entsprechende Acrylsäureester von besonderem Interesse sind. Als Monomere (c) kommen vor allem Acrylsäure, Methacrylsäure, Acrylamid und Methacrylamid sowie ferner Crotonsäure, Itaconsäure, Maleinsäure, Crotonsäureamid, Itaconsäuramono- und -diamid sowie Maleinsäuremono- und -diamid in Frage. Ihre Menge beträgt vorzugsweise 2 bis 4 Gew.%, bezogen auf die gesamten Monomeren.

Die Konzentration der wäßrigen Vinylidenchlorid-Copolymerisat-Dispersion kann bei ihrer erfindungsgemäßen Verwendung in weiten Bereichen variiert werden. Sie liegt im allgemeinen zwischen 40 und 60 Gew.%, kann aber auch darüber oder darunter liegen. Zusätzlich zu den als Bindemittel eingesetzten Vinylidenchlorid-Copolymerisat-Dispersionen können noch andere, übliche Zusatzstoffe bei der Herstellung der Putze, z.B. Verdickungsmittel wie Culluloseether, Polyacrylsäurederivate oder Verdikker auf Basis von Polyurethanen und Filmbildehilfsmittel wie Testbenzin, Glykolether und -ester sowie die üblichen Pigmente wie Titandioxid vom Rutil-Typ und Füllstoffe auf Basis Calcit oder Talkum eingesetzt werden.

Die unter erfindungsgemäßer Verwendung der wäßrigen Vinylidenchlorid-Copolymerisat-Dispersionen hergestellten Putze zeichnen sich vor allem durch eine besonders große offene Zeit und gute Verarbeitbarkeit aus. Sie ergeben zudem Putze von besonders hoher Wasserfestigkeit, die keine Vergilbung zeigen und die nach DIN 4102 schwerentflammbar sind. Die Wasseraufnahme nach DIN 53 495 liegt bei etwa 5 bis 15 %, ist also sehr wichtig. Die überraschend hohe offene Zeit der Putze wirkt sich besonders günstig bei deren Verarbeitung bei höheren Temperaturen, z.B. bei Sonneneinstrahlung im Sommer aus. Um diesen Sachverhalt zu verdeutlichen, wurde als Bindemittel ein Mischpolymerisat aus Butylacrylat und Styrol verwendet, das mit einer Dispersion nach Beispiel 2 verglichen wird. Beide Dispersionen haben nahezu die gleich MFT. Beide Bindemittel enthielten die gleichen Emulgatoren, Hilfsstoffe usw.

Ein Reibeputz, dessen Zusammensetzung weiter unten angegeben ist, wird auf einen nicht saugfähigen Untergrund aufgetragen. Nach dem Auftrag läßt man den Putz etwas antrocknen. Ist der Putz zu weich, so läßt er sich nicht strukturieren. Hat er eine günstige Konsistenz erreicht, wird der Putz mit einem Traufel abgerieben, wobei die gewünschte rauhe Struktur gebildet wird. Dies ist nur in einer ganz bestimmten Zeitspanne möglich. Wenn man länger wartet und reibt dann, so löst sich der Putz von der Wand ab.

Der Reibeputz mit dem konventionellen Bindemittel konnte nach etwa 20 Minuten mit der Traufel gerieben werden. Nach etwa 25 Minuten war der Putz soweit durchgetrocknet, daß er nicht mehr weiter verarbeitet werden konnte.

Ein Reibeputz mit einem Bindemittel nach Beispiel 2 war geschmeidiger. Der Putz konnte bereits nach etwa 12 Minuten mit der Traufel gerieben werden. Erst nach etwa 30 Minuten war er abgebunden.

Mit dem erfindungsgemäßen Bindemittel in dem Reibeputz - das gleiche gilt auch für einen Spachtelputz - hat man eine längere offene Zeit. Man kann größere Flächen in einem Stück bearbeiten und hat damit weniger Übergänge bzw. Anschlußstellen.

Dies war nicht vorauszusehen, da bekanntlich die Trocknungsgeschwindigkeit von Dispersionsfilmen durch die Verdunstungsgeschwindigkeit des Wassers bestimmt wird und nicht durch die Zusammensetzung des Polymerisates (J.W. Vanderhoff, E.B. Bradford, W.K. Carrington in J. Polym. Sci., Symposium No 41 (1973) 155). Die geringe Wasseraufnahme der abgebundenen Putze wirkt sich sehr vorteilhaft durch eine starke Verminderung des unerwünschten Weißanlaufens, z.B. bei Bundsteinputzen, aus. Geschätzt wird außerdem die Resistenz gegen Algen- und Moosbewuchs. Die beanspruchten Bindemittel haben gegenüber den bekannten Bindemitteln eine deutlich verbesserte Scheuerfestigkeit. Die Scheuerfestigkeit oder Waschbeständigkeit wird nach DIN 53 778 geprüft. Bei den bekannten Bindemitteln beträgt sie 1500 Cyclen, bei den erfindungsgemäßen Bindemitteln 2000-2500 Cyclen bei einer PVK von 81 %. Die günstigen Eigenschaften bleiben bei VDC-Mengen über 50 % erhalten, jedoch steigt dann die Vergilbung, was unerwünscht ist.

Die in folgenden Beispielen angegebenen Teile und Prozente beziehen sich, wenn nicht anders angegeben, auf das Gewicht.

### A. Herstellung der wäßrigen Vinylidenchlorid-Copolymerisat-Dispersionen

### Beispiel 1

In einem druckfesten Polymerisationskessel eines Volumens von 200 Vol.-Teilen werden 31,66 Teile Wasser, 0,18 Teile Kaliumpersulfat und 0,18 Teile einer 40 %igen wäßrigen Lösung des Natriumsalzes von C₁₅-Paraffinsulfonat vorgelegt. Anschließend wird dreimal mit 5 bar Stickstoff gespült, entspannt und 9,5 Vol.-Teile Zulauf I zugegeben. Man heizt auf 60 bis 70°C auf und beginnt bei Erreichen von 35°C mit dem kontinuierlichen Zulaufenlassen der Zuläufe I und II, die innerhalb von 4 Stunden zugegeben werden. Anschließend wird das Reaktionsgemisch 3 Stunden auf 60°C gehalten, mit Stickstoff gespült und anschließend gekühlt und mit Ammoniak der pH-Wert auf 7 bis 9 gestellt.

Als Zulauf I wird eine wäßrige Emulsion aus 12,17 Teilen Wasser, 0,4 Teilen Acrylamid, 0,6 Teilen Acrylsäure, 12,06 Teilen Vinylidenchlorid, 25,14 Teilen n-Butylacrylat und 12,07 Teilen Methylmethyacrylat, emulgiert mit einer Mischung aus 2,06 Teilen einer 35 %igen wäßrigen Lösung des Natriumsalzes des Schwefelsäureesters von mit 25 Mol Ethylenoxid ethoxyliertem para-Isooctylphenol und 1,26 Teilen einer wäßrigen 20 %igen Lösung von mit 25 Mol Ethylenoxid ethoxylierten para-Isooctylphenol, als Zulauf II eine Lösung von 0,09 Teilen Natriumformaldehydsulfoxylat in 2,13 Teilen Wasser eingesetzt.

Die erhaltene wäßrige Dispersion hat einen Feststoffgehalt von 50,7 %, ihr LD-Wert ist 81 % und die Mindesffilmbildetemperatur (MFT) 6°C (der LD-Wert ist die Lichtdurchlässigkeit in Prozent einer auf 0,01 Gew.% Feststoffgehalt verdünnten wäßrigen Dispersion).

### Beispiel 2

Man polymerisiert wie für Beispiel 1 angegeben, verwendet jedoch als Zulauf I ein Gemisch aus 1,8 Teilen Acrylamid, 1,2 Teilen Acrylsäure, 20,1 Teilen Vinylidenchlorid und 27,2 Teilen Isobutylacrylat. Man erhält unter sonst gleichen Bedingungen eine wäßrige Dispersion eines Feststoffgehalts von 50,2 % und eines LD-Wertes von 86 %. Ihre MFT beträgt 15°C.

### Beispiel 3

Man polymerisiert wie für Beispiel 1 angegeben, gibt aber als Zulauf I eine Monomerenmischung aus 0,6 Teilen Acrylamid, 0,9 Teilen Acrylsäure, 5,03 Teilen Vinylidenchlorid und 43,74 Teilen Methylacrylat ein. Erhalten wird eine wäßrige Dispersion eines Feststoffgehalts von 50,5 %, deren LD-Wert 72 % und derem MFT 13°C beträgt.

### Beispiel 4

Man polymerisiert wie im Beispiel 1 angegeben, verwendet aber einen Zulauf I aus 0,75 Teilen Acrylamid, 0,75 Teilen Acrylsäure, 10,06 Teilen Vinylidenchlorid, 28,15 Teilen n-Butylacrylat und 10,56 Teilen Styrol. Erhalten wird eine wäßrige Dispersion eines Feststoffgehalts von 51,2 %, eines LD-Werts von 82 % und der MFT 4°C.

### Beispiel 5

Man polymerisiert wie für Beispiel 1 angegeben, verwendet aber als Zulauf I ein Monomerengemisch aus 0,8 Teilen Methacrylamid, 1,21 Teilen Methacrylsäure, 15,08 Teilen Vinylidenchlorid und 33,18 Teilen Ethylacrylat.

Erhalten wird eine 48,9 %ige wäßrige Polymerisatdispersion eines LD-Werts von 91 % und der MFT 10°C.

### Beispiel 6

Man polymerisiert wie in Beispiel 1 angegeben, verwendet aber als Zulauf eine Monomerenmischung aus 0,5 Teilen Acrylamid, 0,75 Teilen Acrylsäure, 12,07 Teilen Vinylidenchlorid, 15,58 Teilen tertiär-Butylacrylat und 21,37 Teilen n-Butylecrylat.

Erhalten wird eine Polymer-Dispersion eines Feststoffgehalts von 52,2 %, des LD-Werts 89 % und MFT 4°C.

### Beispiel 7

Man pelymerisiert wie in Beispiel 1 angegeben, verwendet aber als Zulauf I eine Monomerenmischung aus 1 Teil Acrylamid, 1 Teil Methacrylsäure, 10,06 Teile Vinylidenchlorid, 5,03 Vinylchlorid und 33,18 Teilen Iso-butylacrylat.

Erhalten wird eine Polymer-Dispersion eines Feststoffgehalts von 49,2 %, des LD-Werts 85 % und der MFT 4°C.

### Beispiel 8

Man polymerisiert wie in Beispiel 1 angegeben, verwendet aber als Zulauf I eine Monomerenmischung aus 0,5 Teilen Acrylamid, 1 Teil Acrylsäure, 25,15 Teilen Vinylidenchlorid, 19,19 Teilen Vinylpropionat und 4,53 Teilen Butylacrylat.

Erhalten wird eine Polymerdispersion mit einem Feststoffgehalt von 50,1 % des α D-Werts 72 % und des MFT = 17°C.

### B. Verwendung der Vinylidenchlorid-Copolymerisat-Dispersion als Bindemittel in Putzen.

Mit den wie oben angegebenen hergestellten Vinylidenchlorid-Copolymerisat-Dispersionen wird ein Reibeputz nach den im folgenden angegebenen Rezepturen hergestellt und diese wie folgt geprüft:

### Reibeputz

131,0 Teile einer 50 %igen Dispersion gemäß Beispiele 1 bis 8, 19,5 Teile einer 10 %igen wäßrigen Natriumpolyphosphatlösung, 2 Teile Konservierungsmittel, 8,3 Teile einer 8 %igen wäßrigen Lösung eines Polyacrylsäurederivates, 10 Teile Testbenzin (Siedegrenzen 180 bis 210°C), 10 Teile Butyldiglykol, 1,3 Teile einer 66 %igen wäßrigen Polyalkylenwachs-Dispersion, 28 Teile Titandioxid (Rubil), 459 Teile Calciumcarbonat einer mittleren Korngröße von 40 µm, 256 Teile Calciumcarbonat einer mittleren Korngröße von 130 µm, 43 Teile Rundkies mit einer Körnung von 1,5 bis 2 mm, 1,3 Teile handelsüblicher Entschäumer auf Silikonbasis, verdünnt 1 : 1 mit Butylacrylat und 30 Teile Wasser.

Der Bindemittelgehalt beträgt etwa 6,5 %, der Feststoffgehalt etwa 86 %, das spezifische Gewicht etwa 1,9 g/cm³.

### Prüfung

Reibeputze wurden in einer Stärke von etwa 50 µm (Farben) bzw. etwa 2,5 mm (Putze) in üblicher Weise auf eine grundierte verputzte Außenwand aufgebracht, wobei für den Reibeputz eine Edelstahlglättkelle (Traufel) verwendet wurde. Die Reibeputze wurden 2 Jahre bewittert. Die Putze waren nach der Bewitterung praktisch nicht verschmutzt und zeigten keine Risse. Außerdem waren die verputzten Flächen frei von Algen- und Moosbewuchs.

## Patentansprüche

1. Verwendung von wäßrigen Dispersionen von Copolymerisaten einer Mindestfilmbildetemperatur von -15 bis +20°C aus
(a) 10 bis 50 Gew.-% Vinylidenchlorid, das bis zur Hälfte durch Vinylchlorid ersetzt sein kann,
(b) 44 bis 88 Gew.-% Estern der Acryl- und/oder Methacrylsäure mit 1 bis 18 C-Atome enthaltenden Alkanolen und gegebenenfalls Styrol, Vinylacetat, Vinylpropionat oder Mischungen dieser Monomeren und
(c) 2 bis 6 Gew.-% α,β-monoolefinisch ungesättigten 3 bis 5 C-Atome enthaltenden Mono- und/oder Dicarbonsäuren und/oder deren Amiden,
wobei die Gewichtsprozente sich auf die Copolymerisate beziehen, als Bindemittel in Putzen.

## Claims

1. The use of an aqueous dispersion of a copolymer which has a minimum film-forming temperature of from -15 to +20° and consists of
a) from 10 to 50% by weight of vinylidene chloride, up to half of which may be replaced with vinyl chloride,
b) from 44 to 88% by weight of esters of acrylic and/or methacrylic acid with alkanols of 1 to 18 carbon atoms and, if required, styrene, vinyl acetate, vinyl propionate or a mixture of these monomers, and
c) from 2 to 6% by weight of α, β-monoolefinically unsaturated mono-and/or dicarboxylic acids of 3 to 5 carbon atoms and/or their amides,
the percentages by weight being based on the copolymer, as a binder in plasters.

## Revendications

1. Utilisation à titre de liants dans des enduits, de dispersions aqueuses de copolymères d'une température filmogène minimale de -15 à 20°C, constitués de
(a) 10 à 50% en poids de chlorure de vinylidène qui peut être remplacé pour moitié par du chlorure de vinyle,
(b) 44 à 88% en poids d'esters de l'acide acrylique et/ou de l'acide méthacrylique, avec des alcanols qui comportent de 1 à 18 atomes de carbone et éventuellement de styrène, d'acétate de vinyle, de propionate de vinyle, ou de mélanges de ces monomères et
(c) 2 à 6% en poids d'acides mono- et/ou dicarboxyliques, α,β-monooléfiniquement insaturés, comportant de 3 à 5 atomes de carbone et/ou de leurs amides,
où les pourcentages pondéraux se rapportent aux copolymères.
